# EUROPEAN PATENT SPECIFICATION

(11) **EP 4 474 327 B1**
(45) Date of publication and mention of the grant of the patent: **26.08.2026**
(21) Application number: 24176214.5
(22) Date of filing: 16.05.2024
(51) Int. Cl.: B65H 67/06

(54) **SUPPLY APPARATUS**
ZUFÜHRVORRICHTUNG
APPAREIL D'ALIMENTATION

(30) Priority: 05.06.2023 JP 2023092568
(43) Date of publication of application: 11.12.2024
(73) Proprietor: Murata Machinery, Ltd., Kyoto-shi, Kyoto 601-8326 (JP)
(72) Inventor: FURUTANI, Yoshihisa, Kyoto-shi, Kyoto, 612-8686 (JP)
(74) Representative: Hoffmann Eitle

(56) References cited:
- JP-A- H08 337 317
- JP-U- S5 543 721
- US-A- 4 596 173

## Description

### Technical Field

The present invention primarily relates to a supply apparatus for feeding a bobbin into a transport device.

### Background Art

JP 2013-6669 A discloses a yarn supply bobbin supply apparatus for supplying an automatic winder with a yarn supplying bobbin housed in a wagon. The yarn supply bobbin supply apparatus includes a movable frame, a cylinder, and a transport conveyor. The movable frame is mounted thereon with the wagon. The cylinder generates power to tilt the wagon mounted on the movable frame. As the wagon tilts, the yarn supply bobbin housed in the wagon is fed onto the transport conveyor. The transport conveyor transports the fed yarn supply bobbin toward the automatic winder.

US 4 596 173 A refers to a bobbin separating unit including at least two first and second serially connected bobbin separating devices, the second bobbin separating device having a given upper level, the first bobbin separating device including a feeding device being controllable by the second bobbin separating device, the feeding device being movable from a bobbin receiving position to bobbin feeding positions disposed above the given upper level, and the feeding device including a feed location in the form of a vibratory conveyor.
Further documents are JP H08 337317 A and JP S55 43721 U.

### Summary of Invention

In JP 2013-6669 A, the movable frame rotates around its upper end as a rotation center, and thus, rotational trajectories of the movable frame and the wagon are large. In particular, in a state for feeding the bobbin, the movable frame is located at a high position, and thus, a height of the apparatus increases.

The present invention has been made in consideration of the above circumstances, and a primary object thereof is to provide a supply apparatus for tilting a housing body configured to house a bobbin to feed the bobbin, with a structure for reducing a height of the apparatus when the bobbin is fed.

The problems to be solved by the present invention are as described above. Next, the means for solving the problems and the effects thereof will be described.

According to an aspect of the present invention, a supply apparatus according to claim 1 is provided. That is, the supply apparatus includes a transport device and a feeding device. The transport device transports a bobbin having yarn wound thereon. The feeding device feeds the bobbin from a housing body housing the bobbin, to the transport device. The state of the feeding device is changeable between a preparation state and a feeding state, and in the feeding state, the bobbin is fed from the housing body into the transport device. The feeding device includes a first member, a second member, a rotation device, and a control device. The first member supports the housing body at least when the state of the feeding device is changed from the preparation state to the feeding state. The second member is connected to the first member and supports the housing body in the feeding state. The rotation device drives the first member and the second member to rotate to change the state of the feeding device between the preparation state and the feeding state. The control device controls the rotation device. The second member is provided so as to extend in a first direction, and the first direction is a direction away from the first member and intersects with the first member. The second member includes an extension part that extends in the first direction and that is located on an opposite side of the first member across a rotation center of the feeding device, in a positional relationship of the first direction in the preparation state, and when the state of the feeding device is changed from the preparation state to the feeding state, the extension part approaches the transport device.

As a result, the rotation center is located at a midway part of the feeding device rather than at an end. Therefore, it is possible to reduce a height of the rotation center, and thus, it is possible to reduce the height of the apparatus in the feeding state.

According to the invention, the supply apparatus has the following configuration. That is, the state of the feeding device includes an auxiliary state for moving the bobbin towards a bottom of the housing body. Under a control of the control device, the state of the feeding device is changed in the order of the feeding state, the auxiliary state, and the feeding state.

When the state of the feeding device is changed from the feeding state to the auxiliary state, it is possible to move the bobbin toward a reverse direction of the transport device. Therefore, the subsequent change of the state of the feeding device to the feeding state imparts momentum to the bobbin, and the momentum allows the bobbin to overcome any step or the like, for example, that may exist in the housing body.

The above-mentioned supply apparatus preferably has the following configuration. That is, a direction perpendicular to the first direction when viewed in a direction parallel to the rotation center is defined as a second direction. The feeding device includes pins arranged to be arced in a range including the opposite side of the first member across the rotation center, in a positional relationship of the second direction in the preparation state. When the rotation device rotates a first transmission member messing with the pins to rotate the feeding device, the state of the feeding device is changed.

As a result, it is possible to increase the freedom in position of the first transmission member and a member for driving the first transmission member to rotate, as compared to a configuration in which a gear and a drive device are arranged at the rotation center.

The above-mentioned supply apparatus preferably has the following configuration. That is, the supply apparatus includes a descent prevention device provided at a location different from the rotation device. The control device controls the descent prevention device. The descent prevention device includes a second transmission member, a stop mechanism, and a detection unit. The second transmission member meshes with the pins. The stop mechanism can stop the rotation of the second transmission member during a descent for changing the state of the feeding device from the feeding state to the preparation state. The detection unit detects abnormal rotation of the feeding device during the descent. If the detection unit detects the abnormal rotation of the feeding device during the descent, the control device operates the stop mechanism to stop the rotation of the second transmission member.

As a result, it is possible to stop the rotation of the feeding device if an abnormality occurs during the descent of the feeding device.

The above-mentioned supply apparatus preferably has the following configuration. That is, the stop mechanism includes a gear, a gear stopper member, and an actuator. The gear rotates integrally with the second transmission member. During an ascent where the state of the feeding device is changed from the preparation state to the feeding state, the gear stopper member slides against the gear such that rotation of the gear is permitted. During the descent, the gear stopper member interferes with the gear to prevent the rotation of the gear. The actuator moves the gear stopper member toward or away from the gear. During the descent, if the detection unit does not detect the abnormal rotation of the feeding device, the control device controls the actuator to move the gear stopper member away from the gear to permit the rotation of the gear. During the descent, if the detection unit detects the abnormal rotation of the feeding device, the control device controls the actuator to move the gear stopper member close to the gear to prevent the rotation of the gear.

As a result, it is possible to surely stop the descent of the feeding device due to the abnormal rotation while permitting the ascent of the feeding device.

The above-mentioned supply apparatus preferably has the following configuration. That is, the feeding device includes a detected part arranged to be arced in a range including the opposite side of the first member across the rotation center, in a positional relationship of the second direction in the preparation state. The control device determines whether the abnormal rotation of the feeding device occurs, based on the number of times the detection unit detects the detected part per unit time.

This makes it possible to detect the abnormal rotation of the feeding device with a simple configuration.

The above-mentioned supply apparatus preferably has the following configuration. That is, the rotation device includes a drive device and a reducer. The drive device generates a driving force for driving the first member and the second member to rotate. The reducer includes an input unit to which the driving force is input by the drive device and an output unit decelerates the driving force and output a decelerated driving force. The first member and the second member are driven to rotate by the driving force output from the output unit of the reducer. The reducer includes a self-locking function of preventing driving of the input unit by a force transmitted to the output unit to prevent driving of the output unit.

When the self-locking function is effected, it is possible to suppress the feeding device from rotating due to its own weight.

In the above-mentioned supply apparatus, it is preferable that the reducer includes a worm gear, and the self-locking function is realized by the worm gear.

This makes it possible to suppress the rotation of the feeding device due to its own weight by using only a mechanical configuration.

The above-mentioned supply apparatus preferably has the following configuration. That is, the supply apparatus includes a stopper member stops the bobbin flowing toward the transport device. The feeding state includes a first feeding state and a second feeding state. In the first feeding state, a distal end of the extension part is located lower than in the second feeding state. In the first feeding state, the stopper member is located on an extension line of a downstream end of a contact surface on which the bobbin fed into the transport device flows. In the second feeding state, the extension line of the downstream end of the contact surface intersects with an upper end of the stopper member or is located above the stopper member. Under a control of the control device, the state of the feeding device is changed in the order of the first feeding state and the second feeding state.

In the first feeding state, the bobbins flow on the contact surface and are blocked by the stopper member. Thereafter, the state of the feeding device is changed to the second feeding state, and thus, it is possible to feed the blocked bobbins into the transport device.

The above-mentioned supply apparatus preferably has the following configuration. That is, the first member includes a solid base member and a support member. The support member is attached to the base member, is hollow, and contacts the bottom of the housing body to support the housing body.

This reduces the size and weight of each component compared to a case where the first member is formed by a single member. The support member is hollow, and thus, the weight of the support member is reduced. As a result, it is possible to facilitate handling and assembly of the components.

The above-mentioned supply apparatus preferably has the following configuration. That is, the second member includes a contact surface that contacts a side surface of the housing body and on which the bobbin fed into the transport device flows. The contact surface is formed thereon with a guide projection that guides, toward an inside of the housing body, the bobbin moving along the contact surface toward a bottom side of the housing body.

This suppresses the bobbin from entering between the contact surface and the housing body.

The above-mentioned supply apparatus preferably has the following configuration. That is, the rotation device is formed with an outer peripheral surface that restricts movement of the bobbin, by preventing the bobbin at an upstream end of the transport device from moving further upstream, when the state of the feeding device is changed from the preparation state to the feeding state. The outer peripheral surface includes an arced surface when the outer peripheral surface is viewed in a direction of a rotation shaft of the rotation device.

As a result, the outer peripheral surface includes an arced surface, and thus, the yarn or the bobbin is less likely to be caught between the outer peripheral surface and another member. The bobbin is less likely to be pinched between the outer peripheral surface and another member.

### Brief Description of Drawings

FIG. 1 is a perspective view of a supply apparatus according to an embodiment of the present invention.
FIG. 2 is a side view of the supply apparatus.
FIG. 3 is an exploded perspective view illustrating a structure of a first member.
FIG. 4 is a perspective view of a rotation device.
FIG. 5 is a front view of a descent prevention device and a disk.
FIG. 6 is a diagram showing whether rotation is permitted in each of the rotation directions when the descent prevention device is at a distant position or a close position.
FIG. 7 is a flowchart of a process for supplying a bobbin.
FIG. 8 is a side view illustrating a process of setting a housing body in a feeding device.
FIG. 9 is a side view illustrating a process in which the state of the feeding device is repeatedly changed between a first feeding state and a second feeding state.
FIG. 10 is a side view illustrating a process in which the state of the feeding device is changed to an auxiliary state and then to the second feeding state.

### Description of Embodiments

Next, with reference to the drawings, embodiments of the present invention will be described.

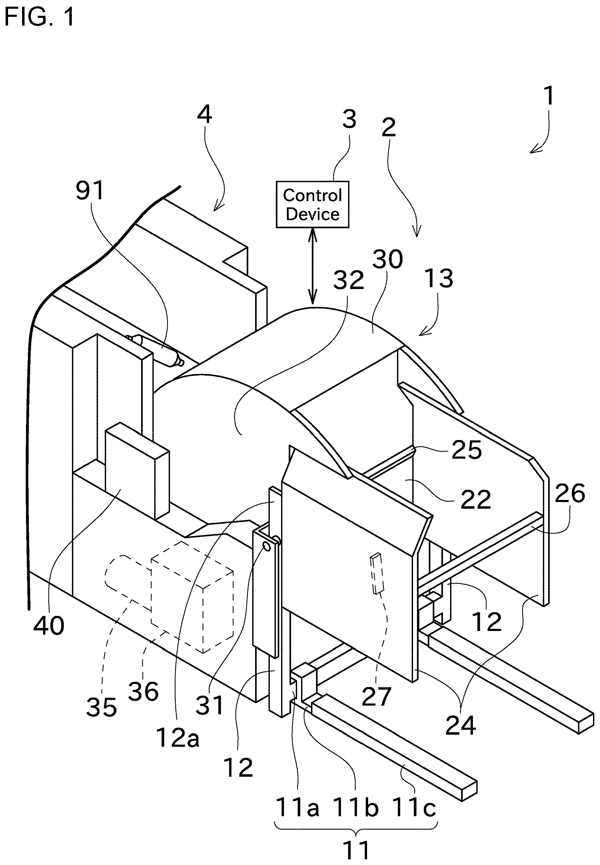

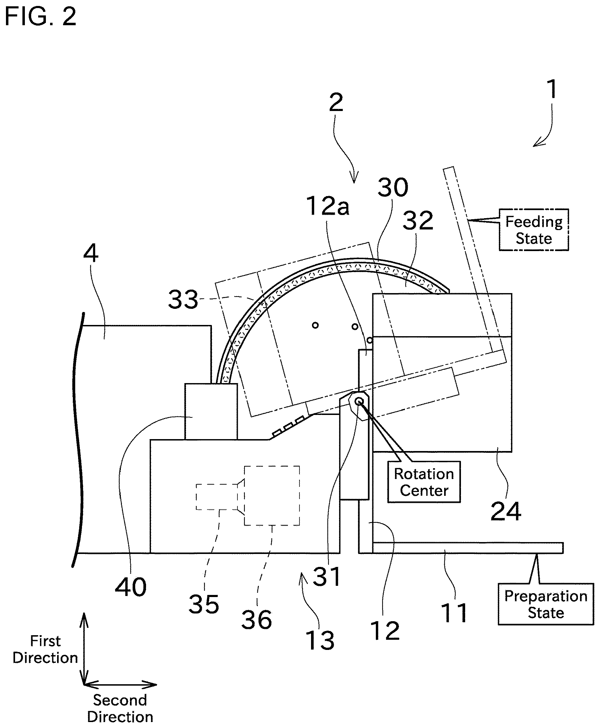

Firstly, with reference to FIG. 1 and FIG. 2, an overview of a supply apparatus 1 will be described. The supply apparatus 1 is an apparatus for supplying a bobbin 91 around which a yarn is wound. The bobbin supplied by the supply apparatus 1 is supplied to a yarn winding machine such as an automatic winder. The yarn winding machine winds the yarn wound around the bobbin to produce a package. As illustrated in FIG. 1, the supply apparatus 1 includes a feeding device 2, a control device 3, and a transport device 4.

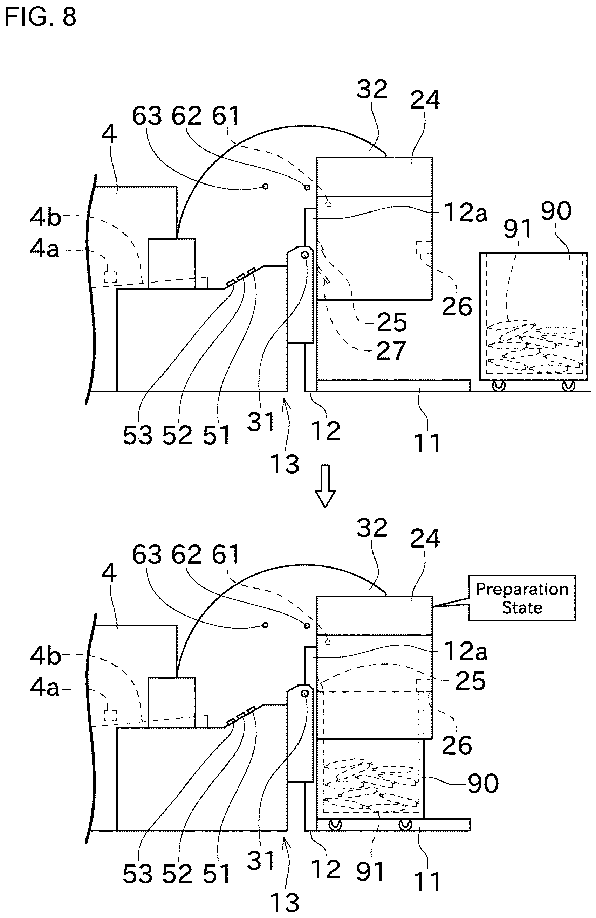

The feeding device 2 is set with a housing body 90 (FIG. 8) described later. The housing body 90 has a bottom and a plurality of side surfaces that stand up from the bottom, and a housing space is formed inside these surfaces. Bobbins 91 are housed in the housing space of the housing body 90. The feeding device 2 is rotatable. A state of the feeding device 2 is changed at least between a preparation state and a feeding state. When the state of the feeding device 2 is changed from the preparation state to the feeding state, each bobbin 91 moves by its own weight, and the bobbin 91 is fed into the transport device 4.

The control device 3 includes a calculation device such as a CPU, a RAM, and a storage. The storage is an HDD, an SSD, a flash memory, or the like. Programs related to the supply apparatus 1 and data such as a condition necessary for executing the programs are stored in the storage. The arithmetic unit reads a program stored in the storage to the RAM and executes the program. As a result, the control device 3 performs various controls related to the supply apparatus 1.

The transport device 4 transports the bobbin 91 fed by the feeding device 2 toward the yarn winding machine. The transport device 4 transports the bobbin 91 by using, for example, a slope, a conveyor, a pressing member, or the like.

Next, with reference to FIG. 1 to FIG. 4, the feeding device 2 will be described in detail. As illustrated in FIG. 1 and FIG. 2, the feeding device 2 includes a first member 11, a second member 12, and a rotation device 13. In the following description, a direction of a rotation shaft of the feeding device 2 will be simply referred to as a rotation shaft direction. A rotation center of the feeding device 2 is simply referred to as a rotation center.

The first member 11 supports the housing body 90 at least when the state of the feeding device 2 is changed from the preparation state to the feeding state. That is, the first member 11 supports the housing body 90 at least in a temporal state when the state of the feeding device 2 is changed from the preparation state to the feeding state. It is noted that the first member 11 may support the housing body 90 even in the preparation state. The first member 11 is a rod-shaped member extending horizontally to an installation surface in the vicinity of the installation surface of the supply apparatus 1. Each first member 11 is arranged side by side in the rotation shaft direction. However, it is possible to modify the first member 11 as appropriate to match a shape of the bottom of the housing body 90. For example, the first member 11 may be a flat plate or a single rod-shaped member.

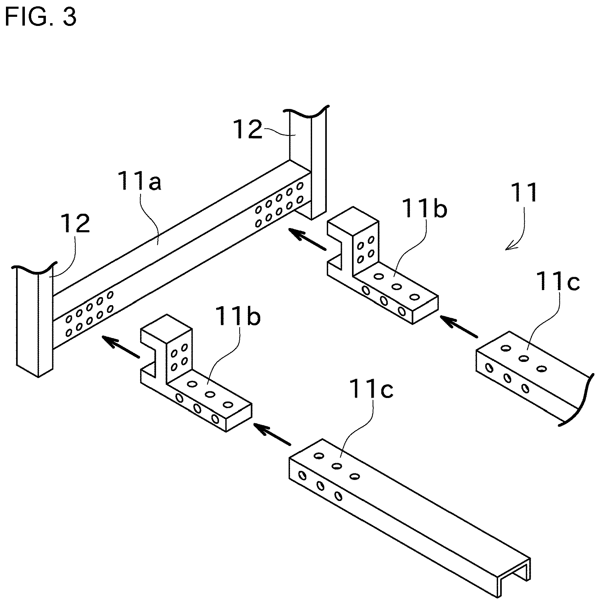

As illustrated in FIG. 3, the first member 11 of the present embodiment includes a first frame 11a, a base member 11b, and a support member 11c.

The first frame 11a is connected to the second member 12. More specifically, the first frame 11a is provided so as to connect two second members 12 arranged side by side in the rotation shaft direction. The support member 11c contacts the bottom of the housing body 90 to support the housing body 90 at least in a temporal state during a change of the state of the feeding device 2 from the preparation state to the feeding state.

The base member 11b connects the first frame 11a and the support member 11c. More specifically, the base member 11b includes an L-shaped portion, and is attached to the first frame 11a at a portion corresponding to one side of such an L shape. Specifically, mounting holes are formed in the first frame 11a and the base member 11b, respectively, and when positions of the mounting holes are aligned to fasten a fastener such as a bolt, it is possible to mount the base member 11b to the first frame 11a. The support member 11c is attached to a portion corresponding to the other side of the L-shape, of the base member 11b. Specifically, mounting holes are formed in the base member 11b and the support member 11c, respectively, and when positions of the mounting holes are aligned to fasten a fastener such as a bolt, it is possible to mount the support member 11c to the base member 11b.

Thus, each member forming the first member 11 is attached by using a fastener, and thus, the base member 11b and the support member 11c are detachable. This makes it possible to replace the support member 11c depending on the shape of the housing body 90, for example. A set of mounting holes are formed in a portion mounted to the first frame 11a, of the base member 11b. On the other hand, the first frame 11a is formed with a plurality of sets of mounting holes. This makes it possible to change a mounting position of the base member 11b for the first frame 11a. This makes it possible to change the position of the support member 11c depending on, for example, the shape of the housing body 90.

In the present embodiment, the first member 11 has a divided structure, and thus, the size and the weight of each component are smaller than when the first member 11 is formed by a single member. This makes it easy to handle and assemble the components. In particular, the support member 11c is formed by bending a plate material. Therefore, the support member 11c is hollow, and thus, its weight is lighter than that of a solid member. From such a perspective, the components of the first member 11 are easy to handle.

A configuration of the first member 11 is an example and may be changed. For example, the first member 11 may be formed by two components (that is, the base member 11b and the support member 11c) instead of the three components. Shapes of the individual components are also just examples, and for example, the support member 11c may be solid. Instead of the configuration in which one support member 11c is mounted to one base member 11b, a configuration in which one plate-shaped support member 11c is mounted to the two base members 11b may be used.

The second member 12 is directly or indirectly connected to the first member 11 (first frame 11a). Each second member 12 is arranged side by side in the rotation shaft direction. In the preparation state, the second member 12 is provided so as to extend in a first direction, and the first direction is a direction away from the first member 11 and intersects with the first member 11. In the present embodiment, in the preparation state, the first member 11 extends in a horizontal direction, the second member 12 extends in a vertical direction, and directions in which the first member 11 and the second member 12 extend are perpendicular to each other. It is noted that such a positional relationship is merely an example, and the first member 11 may extend in a direction different from the horizontal direction, and the second member 12 may extend in a direction different from the vertical direction. The directions in which the two members 11 and 12 extend need only intersect, and the directions in which the two members 11 and 12 extend do not need to be perpendicular to each other. For example, if a certain member is a rod-shaped member, a longitudinal direction of the rod-shaped member coincides with such an extending direction. Even if a certain member is not a rod-shaped member, as long as the longitudinal direction of such a member can be imagined, such a longitudinal direction corresponds to the extending direction.

The second member 12 is formed with an extension part 12a. The extension part 12a is a part extending in the first direction, of the second member 12, and is a part located on the opposite side of the first member 11 across the rotation center, with respect to the positional relationship of the first direction in the preparation state. Here, what is important in relation to the positional relationship between the first member 11 and the second member 12 is the positional relationship with respect to the rotation center, and thus, it is preferable to understand such a positional relationship from a view seen in the rotation shaft direction (for example, a side view of FIG. 2). In FIG. 2, the position of the first member 11 in the first direction is below the rotation center, and more specifically, is substantially the same position as the installation surface. On the other hand, the position of the extension part 12a in the first direction is above the rotation center. The extension part 12a and the first member 11 rotate integrally, and thus, one of the extension part 12a and the first member 11 rises, the other descends.

If the extension part 12a is not present, the first member 11 and the second member 12 rotate around an upper end of the second member 12 as the rotation center. In such a case, a rotation locus tends to be large. In contrast, in the present embodiment, due to the presence of the extension part 12a, the first member 11 and the second member 12 rotate not around the upper ends of the first member 11 and the second member 12 but around a position below the upper ends, as the rotation center. As a result, it is possible to suppress the size of the rotation locus, and this, it is possible to suppress the height of the apparatus in the feeding state.

As illustrated in FIG. 1 and FIG. 2, the second member 12 further includes a contact surface 22 and a guide side plate 24.

The contact surface 22 is a plate-shaped member arranged so as to connect the pair of second members 12. The contact surface 22 is contacted by a side surface of the housing body 90. Therefore, in a state where the bobbin 91 is fed, the second member 12 supports the housing body 90 via the contact surface 22. In the feeding state, a downstream end of the contact surface 22 (or a distal end of the extension part 12a) is located below a horizontal plane passing through the rotation center. When the state of the feeding device 2 is changed from the preparation state to the feeding state, the extension part 12a approaches the transport device 4, and the bobbin 91 fed from the housing body 90 moves toward the transport device 4 through the contact surface 22. It is noted that the second member 12 may be changed to a flat plate-like member, and the second member 12 and the contact surface 22 may be integrated together.

The contact surface 22 is provided with a guide projection 25 and a housing body sensor 27. The guide projection 25 and the housing body sensor 27 will be described in detail later.

A pair of the guide side plates 24 which are plate-like members are provided on sides of the contact surface 22 (at both ends in the rotation shaft direction). The guide side plate 24 guides the bobbin 91 so that the bobbin 91 does not fall off the side of the feeding device 2. Each guide side plate 24 in the present embodiment includes a tapered portion, and guides the bobbin 91 so that the bobbin 91 moves closer to a center in a width direction as the bobbin 91 approaches the downstream side. It is noted that the tapered portion is not an essential shape and may be omitted. With the tapered portion, it is possible to adjust an amount of bobbins 91 to be fed from the feeding device 2 to the transport device 4.

The guide side plate 24 is provided with a holding rod 26. The holding rod 26 is a rod-shaped member arranged to connect the pair of guide side plates 24. The holding rod 26 holds the housing body 90 to prevent the housing body 90 from falling when the housing body 90 is tilted. The holding rod 26 may have a shape other than a rod shape as long as the housing body 90 is capable of holding the housing body 90.

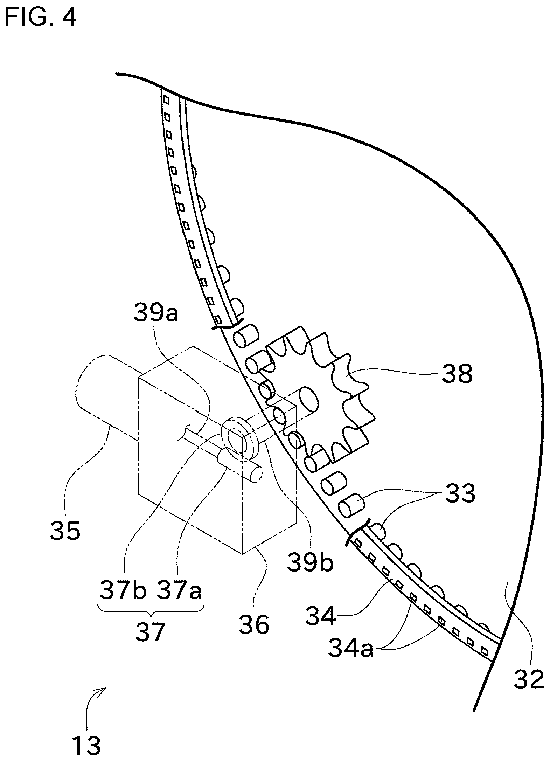

The rotation device 13 drives the first member 11 and the second member 12 to rotate. As a result, the state of the feeding device 2 is changed. As illustrated in FIG. 1 and FIG. 4, the rotation device 13 includes a rotation shaft 31, a rotation plate 32, a motor (drive device) 35, a reducer 36, and a first sprocket (first transmission member) 38.

The rotation shaft 31 is a shaft-shaped member and rotatably supports the first member 11, the second member 12, and a part of the rotation device 13 (rotation plate 32). A central axial direction of the rotation shaft 31 corresponds to the rotation center. It should be noted that the rotation shaft 31 is not an essential component. For example, if it is so configured that a guide plate provided on a member on a rotation side is rotated along a cam follower provided on a member on a support side, it is possible to omit the rotation shaft 31. Even if the rotation shaft 31 is omitted, the feeding device 2 rotates and therefore the rotation center exists.

A pair of the rotation plates 32 which are disk-shaped (specifically, sector-shaped) members are arranged side by side in the rotation shaft direction. The rotation plate 32 is fixed to the first member 11 or the second member 12 and is capable of rotating integrally with the first member 11 and the second member 12. As illustrated in FIG. 4, the rotation plate 32 includes a plurality of pins 33 and an arcuate plate 34. The plurality of pins 33 are arranged to be arced on a surface of the rotation plate 32. Specifically, as illustrated in FIG. 2, a direction perpendicular to the first direction when viewed in a direction parallel to the rotation center is defined as a second direction. In the positional relationship of the second direction in the preparation state, the pins 33 are arranged in a range including the opposite side of the first member 11 with respect to the rotation center. The pins 33 may be arranged on the same side as the first member 11 with respect to the rotation center. The arcuate plate 34 is arranged at a position overlapping the pin 33 when viewed in the rotation shaft direction. A central axial direction of the rotation plate 32, a central axial direction of the arc formed by the plurality of pins 33, and a central axial direction of the arcuate plate 34 coincide with each other. A function of the arcuate plate 34 will be described later.

The motor 35 uses a supplied drive current to generate a driving force for rotating the feeding device 2. In the motor 35, rotation directions are switchable. When the rotation directions of the motor 35 are switched, it is possible to switch rotation directions of the feeding device 2. The motor 35 is a motor with a brake, and has a structure in which, when no driving current is supplied, a clutch operates so that rotation of a rotor is not transmitted to an output shaft. This allows the rotation of the feeding device 2 to be stopped if, for example, the supply of the drive current is suddenly cut off due to power outage, wiring abnormality, or the like, while the feeding device 2 is in the feeding state. Similar to the pins 33 described above, the motor 35 is arranged in a range including the opposite side of the first member 11 with respect to the rotation center in terms of the positional relationship of the second direction in the preparation state. Here, the first member 11 side in the second direction with respect to the rotation center overlaps with a movement trajectory of the housing body 90 and the like, and thus, only has a limited space that can be used to place components. On the other hand, on the opposite side of the first member 11 in the second direction with respect to the rotation center, there is a frame (structural member) of the feeding device 2, and in particular, no worker is performing any work, and thus, a relatively large space is available. In the present embodiment, the motor 35 and the pins 33 are provided in this space, and thus, each component can be arranged efficiently. When the state of the feeding device 2 is the feeding state, it is necessary to avoid interference among, for example, the guide side plates 24, the motor 35, and other devices (for example, the descent prevention device 40 described below). In such a regard, in the present embodiment, the rotation device 13 is positioned at the above-mentioned position, or more specifically, at a position lower than the rotation center, in the preparation state, and thus, even if the state of the feeding device 2 is changed to the feeding state, the guide side plate 24 and the like are less likely to interfere with the motor 35. As a result, it is possible to make the feeding device 2 compact. The motor 35 in the present embodiment is arranged near the first sprocket 38 which is to be driven, as will be described later. Therefore, it is possible to reduce the number of gears, belts, and the like that transmit the power of the first sprocket 38, and thus, it is possible to simplify the structure.

The reducer 36 decelerates the driving force generated by the motor 35. More particularly, the reducer 36 includes a worm gear 37. The worm gear 37 includes a worm 37a and a worm wheel 37b. The worm 37a is fixed to the input unit 39a. The input unit 39a is fixed to an output shaft of the motor 35 directly or via another member. A driving force is input from the motor 35 to the input unit 39a. The worm 37a and the worm wheel 37b mesh with each other. An output unit 39b is fixed to the worm wheel 37b. The output unit 39b outputs a decelerated driving force. The first sprocket 38 is fixed to the output unit 39b. As a result, the driving force transmitted from the motor 35 to the worm gear 37 is decelerated, and the decelerated driving force is transmitted to the first sprocket 38.

The first sprocket 38 is a disk-shaped member having a plurality of convex portions formed therein and aligned in a circumferential direction. The convex portion of the first sprocket 38 are shaped to mesh with the pins 33. The first sprocket 38 is arranged at a position where the convex portions and the pins 33 mesh with each other. With the configuration, when the first sprocket 38 is rotated with the driving force generated by the motor 35, it is possible to drive the rotation plate 32 (and thus, the first member 11 and the second member 12) to rotate via the pins 33. Instead of the configuration in which the driving force of the motor 35 is transmitted by using the first sprocket 38 and the pins 33, the driving force of the motor 35 may be transmitted to a shaft that functions as a rotation shaft via a gear or the like to drive and rotate the shaft to rotate the feeding device 2.

The reducer 36 is configured to decelerate a driving force by using the worm gear 37, and thus, the reducer 36 has a self-locking function. The self-locking function in the present embodiment is a function of preventing the input unit 39a from being driven by the force transmitted to the output unit 39b to prevent the output unit 39b from being driven. In the worm gear 37, if a force is applied in a direction in which the worm wheel 37b is rotated, the force is not easily transmitted in a direction in which the worm 37a is rotated, and thus, the worm 37a does not rotate. That is, the input unit 39a and the output unit 39b are configured to rotate integrally, and it is not possible to rotate the worm gear 37 even if a force is applied from the output unit 39b side. Therefore, a force applied to the output unit 39b does not drive the output unit 39b, and as a result, the state of the feeding device 2 is not changed. It is possible to realize the self-locking function of the present embodiment by a mechanism alone, without the need for a separate device. When the self-locking function is provided, it is possible to prevent an operator from manually rotating the feeding device 2. Even if the motor 35 abnormally stops when the feeding device 2 is in the feeding state, it is possible to prevent the feeding device 2 from returning to its original state under its own weight. It should be noted that a configuration where the worm gear 37 is not provided may be used as long as the self-locking function is provided. For example, a known reducer with a self-locking function that utilizes a planetary gear may be used.

As described above, in the present embodiment, the housing body 90 is lifted by the driving force generated by the motor 35, and the bobbin 91 is fed into the transport device 4. In contrast, in Patent Document 1, the bobbin is fed by the driving force generated by a cylinder. When a cylinder is used, the height of a transport unit and the bobbin reception unit increases due to an influence of the height of the member for driving the cylinder or the height of the cylinder itself. As a result, it is necessary to lift the housing body higher, and the height of the apparatus in the feeding state is high. In contrast, the motor 35 of the present embodiment is not subject to such a type of restriction, and therefore, it is possible to reduce the height of the apparatus in the feeding state compared to Patent Document 1.

The rotation device 13 further includes an outer peripheral surface 30. The outer peripheral surface 30 is a surface that includes an arced portion when the rotation device 13 is viewed in the axial direction of the rotation shaft 31. The outer peripheral surface 30 is formed downstream in the transport direction of a transport surface 4b (downstream in the direction of rotation for a change from the preparation state to the feeding state). When the state of the feeding device 2 is changed from the preparation state to the feeding state, the outer peripheral surface 30 restricts movement of the bobbins 91, by preventing the bobbins 91 at the upstream end of the transport device 4 from reaching a further upstream area (specifically, a space for rotating the rotation device 13).

The outer peripheral surface 30 is formed by bending a plate material. The bending process is, for example, roll bending using a plurality of rollers to bend a plate material. The outer peripheral surface 30 may be formed by one arcuate plate or a plurality of arcuate plates. When the outer peripheral surface 30 is formed by a plurality of arcuate plates, the arcuate plates are joined together. Gaps may be formed at the joint between the arcuate plates. At least a portion of the gap between the arcuate plates may be covered with a cover member. This makes it difficult for the yarn or bobbin 91 to be caught in the gap between the arcuate plates. The yarn or the bobbin 91 is less likely to be pinched between the outer peripheral surface 30 and other members. The cover member is provided to extend from one to the other of the adjacent arcuate plates. At this time, it is further preferable that a cover member be provided from a downstream arcuate plate toward an upstream arcuate plate in the rotation direction of the rotation device 13 when the preparation state is changed to the feeding state. This makes it even more difficult for the yarn or the bobbin 91 to be pinched between the cover member and the upstream end of the transport device 4. It is noted that the cover member is not an essential component and may be omitted. A position, a range, and an orientation of the cover member may also be changed as appropriate. A part of the arcuate plate may be the cover member.

A whole of the outer peripheral surface 30 does not need to be arced, and only a portion of the outer peripheral surface 30 may be arc-shaped. Specifically, it is only required that at least a part that comes closest to the transport device 4 when the state of the feeding device 2 is changed from the preparation state to the feeding state, has an arc shape.

The outer peripheral surface 30 includes an arced surface, and thus, the yarn or the bobbin 91 is less likely to be caught on the outer peripheral surface 30. Therefore, it is possible to smoothly guide the bobbin 91 in contact with the outer peripheral surface 30 to downstream. Incidentally, the outer peripheral surface 30 being arced is merely an example, and the outer peripheral surface 30 may be polygonal when viewed in the axial direction of the rotation shaft 31. It is possible to form the polygonal outer peripheral surface 30 by forming a plurality of V-bends in a sheet of material.

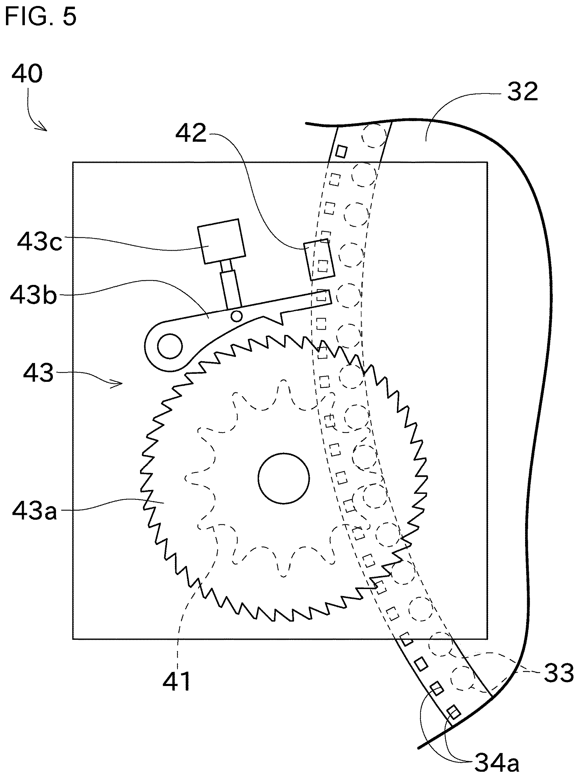

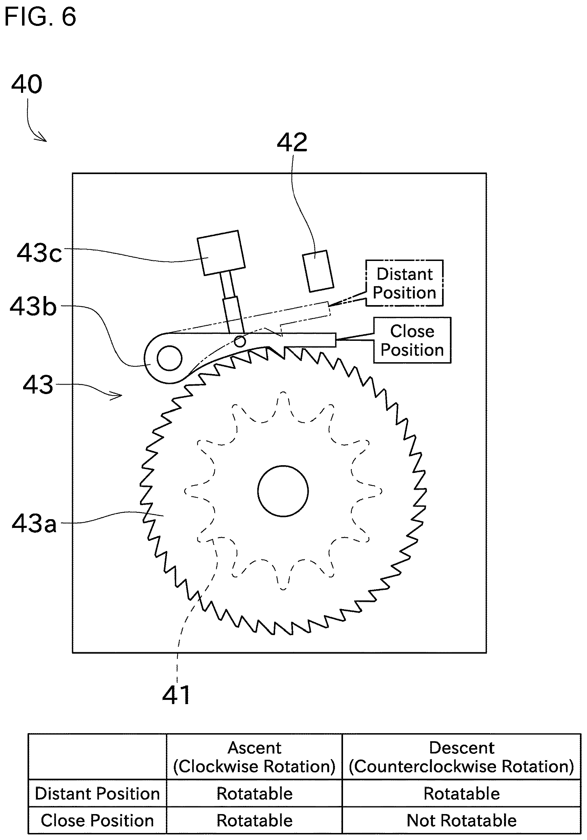

Next, with reference to FIG. 5 and FIG. 6, the descent prevention device 40 provided in the supply apparatus 1 will be described. The descent of the feeding device 2 means that the state of the feeding device 2 is changed from the feeding state to the preparation state. When the feeding device 2 descends, for example, the first member 11 and the housing body 90 descend toward the installation surface. On the other hand, the ascent of the feeding device 2 means that the state of the feeding device 2 is changed from the preparation state to the feeding state. When the feeding device 2 ascends, for example, the first member 11 and the housing body 90 ascend. Here, a position of the center of gravity of rotating parts (including the housing body 90) of the feeding device 2 is located on the first member 11 side with respect to the rotation center in the second direction. Therefore, for example, if the motor 35 stops due to a power outage or the like, if there is no function of preventing the feeding device 2 from descending, the feeding device 2 descends. The descent prevention device 40 is a device configured to prevent such a descent of the feeding device 2. It is noted that the position of the center of gravity is thus described, and thus, it is not necessary to provide a mechanism for preventing the feeding device 2 from ascending during a power outage, for example. As illustrated in FIG. 5, the descent prevention device 40 includes a second sprocket (second transmission member) 41, a detection unit 42, and a stop mechanism 43.

The second sprocket 41 is a disk-shaped member having a plurality of convex portions formed therein and aligned in the circumferential direction. The convex portions of the second sprocket 41 are shaped to mesh with the pins 33, and the second sprocket 41 is arranged at a position where the convex portions mesh with the pins 33. The above-mentioned first sprocket 38 is a drive sprocket configured to drive the rotation plate 32 to rotate, while the second sprocket 41 is a driven sprocket that rotates in response to the rotation of the rotation plate 32. That is, in the present embodiment, the common pins 33 mesh with both the first sprocket 38 and the second sprocket 41. However, the pins that mesh with the first sprocket 38 and the pins that mesh with the second sprocket 41 may be different. In either case, the pins rotate together with the rotation plate 32.

The detection unit 42 detects abnormal rotation of the feeding device 2. More specifically, the detection unit 42 is an optical sensor that emits light and detects the reflected light. The detection unit 42 emits light to the rotation plate 32 (specifically, the arcuate plate 34). Here, the arcuate plate 34 is formed with detected holes (detected parts) 34a at predetermined intervals. The light received by the detection unit 42 changes depending on whether the light emitted by the detection unit 42 strikes the detected hole 34a or the light emitted by the detection unit 42 strikes the surface of the arcuate plate 34. Therefore, the detection unit 42 is capable of detecting a passage of the detected hole 34a, and more specifically, the number of times the detected hole 34a passes per unit time. If the number of times the detected hole 34a passes per unit time is greater than a normal time, it means that the arcuate plate 34 is rotating at a higher speed than a normal time (in other words, rotating abnormally). A detection result of the detection unit 42 is output to the control device 3. The control device 3 determines whether the feeding device 2 is rotating abnormally based on whether the number of times the detected hole 34a passes per unit time exceeds a threshold value.

It is possible to modify the detection unit 42 of the present embodiment as follows. For example, the detection unit 42 is not limited to a reflective optical sensor, but may be a transmissive optical sensor. In a transmission type optical sensor, for example, a light emitting element and a light receiving element are provided on either side of the arcuate plate 34, and the light receiving element detects light every time the detected hole 34a passes between the light emitting element and the light receiving element. The detection unit 42 is not limited to an optical sensor, but may be a contact sensor or a magnet sensor.

It is possible to modify the detected hole 34a of the present embodiment as follows. For example, the detected hole 34a may be formed in the rotation plate 32 instead of the arcuate plate 34. Instead of the detected hole 34a, a sheet that changes the reflectance may be attached, or a notch may be formed. Alternatively, instead of using a portion in which the hole or notch is formed as the detected part, a surface portion of the arcuate plate 34 in which no hole or notch is formed may be used as the detected part.

The stop mechanism 43 includes a gear 43a, a gear stopper member 43b, and an actuator 43c.

The gear 43a is fixed to the second sprocket 41 via a shaft, and the gear 43a and the second sprocket 41 rotate integrally. Teeth of the gear 43a are asymmetric in the circumferential direction, and more specifically, have different inclination angles.

As illustrated in FIG. 6, the gear stopper member 43b is switchable between a distant position and a close position. When the gear stopper member 43b is at the distant position, the gear 43a is rotatable both clockwise and counterclockwise. When the gear stopper member 43b is at the close position, the gear 43a is capable of rotating clockwise while the teeth slide against the gear stopper member 43b. However, counterclockwise rotation of the gear 43a is not possible because counterclockwise rotation of the gear 43a causes the gear stopper member 43b (more specifically, a protrusion formed on the gear stopper member 43b) to be caught by the teeth and prevented from sliding. In the present embodiment, a clockwise rotation of the gear 43a corresponds to the ascent of the feeding device 2, and a counterclockwise rotation of the gear 43a corresponds to the descent of the feeding device 2. That is, when the gear stopper member 43b is placed at the close position, it is possible to suppress the descent of the feeding device 2.

The actuator 43c generates power for switching the gear stopper member 43b between the distant position and the close position. In the present embodiment, the actuator 43c is an electric cylinder and is controlled by the control device 3. Specifically, the control device 3 is capable of aligning the gear stopper member 43b with the distant position by supplying an electric power to the actuator 43c. The control device 3 is capable of aligning the gear stopper member 43b to the close position by not supplying the electric power to the actuator 43c (by stopping the supply of electric power). The term "control of the actuator 43c" as used herein includes not only supplying the electric power to the actuator 43c, but also not supplying the electric power to the actuator 43c. The actuator 43c is not limited to an electric cylinder. The actuator 43c may be, for example, an electromagnetic solenoid or a linear motor.

The control device 3 aligns the gear stopper member 43b with the distant position only when determining that the feeding device 2 is in a state where the feeding device 2 should be descended. This allows the feeding device 2 to move downward. On the other hand, in other cases, the gear stopper member 43b is at the close position. Therefore, the feeding device 2 is allowed to ascend, but it is possible to prevent the feeding device 2 from descending.

The initial position of the actuator 43c is adjusted so that the gear stopper member 43b is at the close position when no electric power is supplied to the actuator 43c. As a result, when the feeding device 2 is not operating or when there is a power outage or wiring trouble, the gear stopper member 43b prevents the gear 43a from rotating counterclockwise, and thus, it is possible to prevent the feeding device 2 from suddenly descending.

As described above, the supply apparatus 1 of the present embodiment has the braking function by the motor 35, the self-locking function by the reducer 36, and the function of preventing a sudden descent by the descent prevention device 40. Therefore, it is possible to substantially surely prevent the feeding device 2 from descending at a timing not intended by the operator. It is noted that of these three functions, one or two functions may be omitted.

The stop mechanism 43 of the present embodiment is merely an example, and may be configured to switch between allowing and not allowing for the rotation of the gear 43a by operating the actuator 43c, for example. In such a case, even when the feeding device 2 is ascended, it is necessary to operate the actuator 43c to separate the gear stopper member 43b from the gear 43a. Instead, no sliding occurs between the gear 43a and the gear stopper member 43b. It may be so configured that when the actuator 43c is operated, the availability of the brake of the gear 43a or the second sprocket 41 is switched.

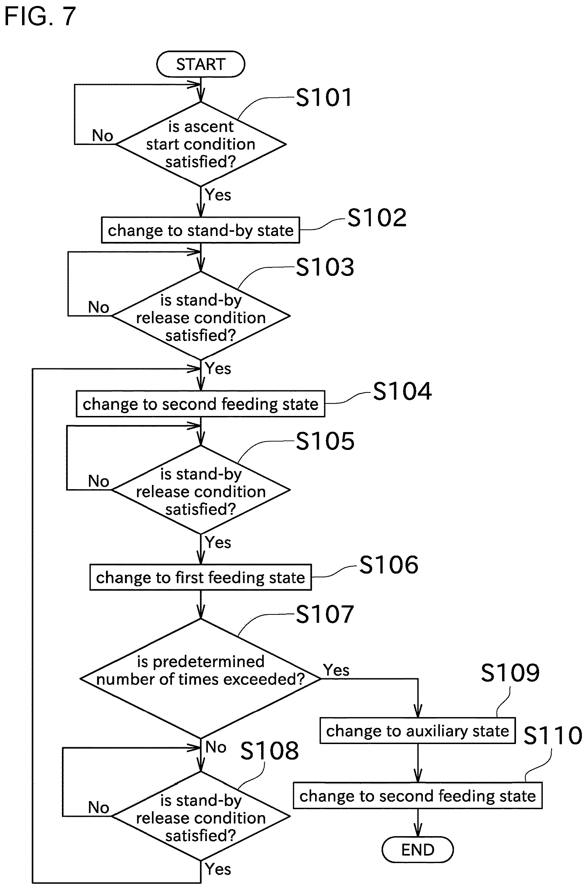

Next, with reference to FIG. 7 to FIG. 10, a flow of processes of supplying the bobbins 91 housed in the housing body 90, particularly a flow of processes in which the feeding device 2 feeds the bobbin into the transport device 4, will be described. The processes illustrated in FIG. 7 are performed by the control device 3.

First, as illustrated in FIG. 8, the housing body 90 is set to the feeding device 2. For example, if the housing body 90 has a box-shaped body and a wheel, the housing body 90 is pushed and moved toward the second member 12 such that the first member 11 is inserted into a bottom surface of the box-shaped body. It is noted that if the housing body 90 has no wheels, the housing body 90 is transported and placed on the first member 11 by the operator or a robot or the like. The housing body 90 and the first member 11 may or may not be fixed to each other.

The above-mentioned housing body sensor 27 is a contact sensor, and when the housing body 90 is set to the feeding device 2, a signal output by the housing body sensor 27 to the control device 3 changes. This allows the control device 3 to determine whether the housing body 90 is set. The housing body sensor 27 is not limited to a contact sensor and may be an optical sensor. The housing body sensor 27 may be arranged at a location other than the contact surface 22 (for example, the first member 11). After the operator sets the housing body 90 to the feeding device 2, the operator instructs feeding of the bobbins 91.

First, the control device 3 determines whether an ascent start condition is satisfied (S101). The ascent start condition is a condition for starting the operation of rotating (ascending) the feeding device 2 from the preparation state to the feeding state. The ascent start condition includes, for example, (1) that the housing body sensor 27 detects the housing body 90, and (2) that the transport device 4 or a device downstream of the transport device 4 is in operation. It is noted that the above-mentioned ascent start condition is merely an example, and another condition may be added, any of the above-mentioned conditions may be omitted, or the ascent start condition itself may be omitted.

If it is determined that the ascent start condition is satisfied, the control device 3 drives the motor 35 to rotate by a predetermined amount so that the state of the feeding device 2 is changed to a stand-by state (S102). The stand-by state is one type of feeding state, and is a state set to prevent a large number of bobbins 91 from being fed at once. The control device 3 causes the feeding device 2 to temporarily wait in the stand-by state.

Next, the control device 3 determines whether a stand-by release condition is satisfied (S103). The stand-by release condition is a condition for releasing the feeding device 2 from the stand-by state and starting the operation of a further ascent. The stand-by release condition is, for example, (1) that a predetermined time elapses, and (2) that the number of bobbins 91 being processed by the transport device 4 is zero or equal to or less than a threshold value. The number of bobbins 91 processed by the transport device 4 is determined by the control device 3, based on the detection result of a sensor 4a (FIG. 8) provided on a transport surface 4b of the transport device 4, for example. It is noted that the stand-by release condition is merely an example, and other conditions may be added, or any of the above conditions may be omitted.

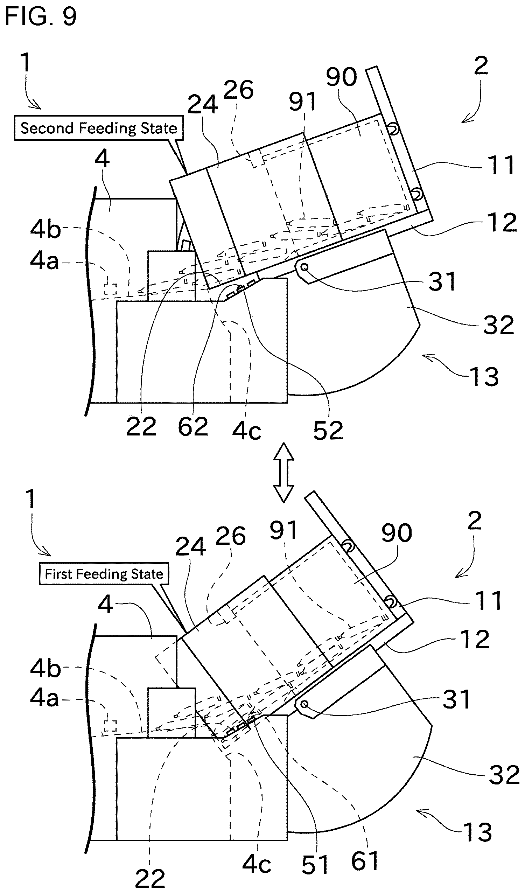

If it is determined that the stand-by release condition is satisfied, the control device 3 drives the motor 35 to rotate so that the state of the feeding device 2 is changed to a second feeding state (S104, an upper part of FIG. 9). The second feeding state is one type of feeding state. In the second feeding state, the distal end of the extension part 12a is positioned lower than in the stand-by state. The second feeding state is a state for feeding the bobbin 91 housed in the housing body 90 toward the transport device 4. Therefore, in the second feeding state, a surface on which the bobbin 91 is transported (specifically, the contact surface 22, one surface of the housing body 90) is inclined downward as the surface approaches the transport device 4. In the second feeding state, a distal end of the contact surface 22 is connected to the transport surface 4b. As a result, in the second feeding state, it is possible to feed the bobbin 91 onto the transport surface 4b of the transport device 4 via the contact surface 22.

In the series of processes, the state of the feeding device 2 is changed to the second feeding state a plurality of number of times. The feeding device 2 includes a second proximity sensor 52 and a second protruding piece 62 as a configuration for simply and accurately changing the state of the feeding device 2 to the second feeding state. The second proximity sensor 52 is provided on a fixed side (side that does not rotate even when the feeding device 2 rotates). The second protruding piece 62 is provided on a rotating side (side that rotates integrally with the feeding device 2). In a state where feeding device 2 is in the second feeding state, the second proximity sensor 52 detects a proximity of the second protruding piece 62 and outputs an output result to the control device 3. Instead of the proximity sensor, a contact sensor, an optical sensor, or the like may be used.

Instead of a method of using the second proximity sensor 52 and the second protruding piece 62, a rotation angle of the feeding device 2 may be identified based on the detection result of the detected hole 34a by the detection unit 42. Alternatively, in a configuration in which an amount of rotation of the motor 35 can be specified (for example, a stepping motor), the rotation angle of the feeding device 2 may be determined based on a command transmitted to the motor 35.

Next, the control device 3 determines whether the stand-by release condition is satisfied (S105). The stand-by release condition used in this process may be the same as or different from that in step S103. If it is determined that the stand-by release condition is satisfied, the control device 3 drives the motor 35 to rotate so that the state of the feeding device 2 is changed to a first feeding state (S106, a lower part of FIG. 9). The first feeding state is one type of feeding state. The distal end of the extension part 12a in the first feeding state is positioned lower than the distal end of the extension part 12a in the second feeding state. Therefore, an extension line of the downstream end of the contact surface 22 intersects with the stopper member 4c located below the transport surface 4b. The stopper member 4c is a member that stops the bobbin 91 that flows on the contact surface 22 toward the transport device 4 (more specifically, a surface that stops the bobbin 91). The stopper member 4c in the present embodiment is a wall-shaped member provided in an upstream region of the transport device 4. If the feeding device 2 is in the first feeding state, some of the bobbins 91 are stopped by the stopper members 4c and are not fed onto the transport surface 4b. It is noted that the bobbin 91 located higher than the stopper member 4c may be fed onto the transport surface 4b. In the second feeding state described above, an extension line of the downstream end of the contact surface 22 is located above the stopper member 4c and intersects with the transport surface 4b. It is noted that in the second feeding state, an extension line of the downstream end of the contact surface 22 may intersect with the upper end of the stopper member 4c. This is because even if there is a slight difference in level, it has little effect on feeding the bobbin 91. It is noted that the stopper member 4c may be provided on a frame member of the supply apparatus 1. That is, the stopper member 4c is configured not to rotate even when the state of the feeding device 2 is changed, and is a member that stops the bobbin 91 only when state of the feeding device 2 is changed to the first feeding state.

As a configuration for simply and accurately changing the state of the feeding device 2 to the first feeding state, the feeding device 2 includes a first proximity sensor 51 and a first protruding piece 61. The configurations of the first proximity sensor 51 and the first protruding piece 61 are the same as those of the second proximity sensor 52 and the second protruding piece 62, except that targets to be aligned are different.

The contact surface 22 is more steeply inclined in the first feeding state than in the second feeding state. Therefore, changing the state of the feeding device 2 from the second feeding state to the first feeding state makes it possible to transport the bobbin 91 which could not be transported in the second feeding state, to a downstream side. In addition, changing the state of the feeding device 2 from the first feeding state to the second feeding state makes it possible to feed the bobbin 91 which was stopped by the stopper member 4c, onto the transport surface 4b of the transport device 4. In particular, the control device 3 performs the following processes. That is, the control device 3 determines whether the number of repetitions exceeds a predetermined number (S107), and if not, the control device 3 determines whether the stand-by release condition is satisfied (S108). In determining that the stand-by release condition is satisfied, the control device 3 controls the motor 35. As a result, the state of the feeding device 2 is changed again to the second feeding state (S104).

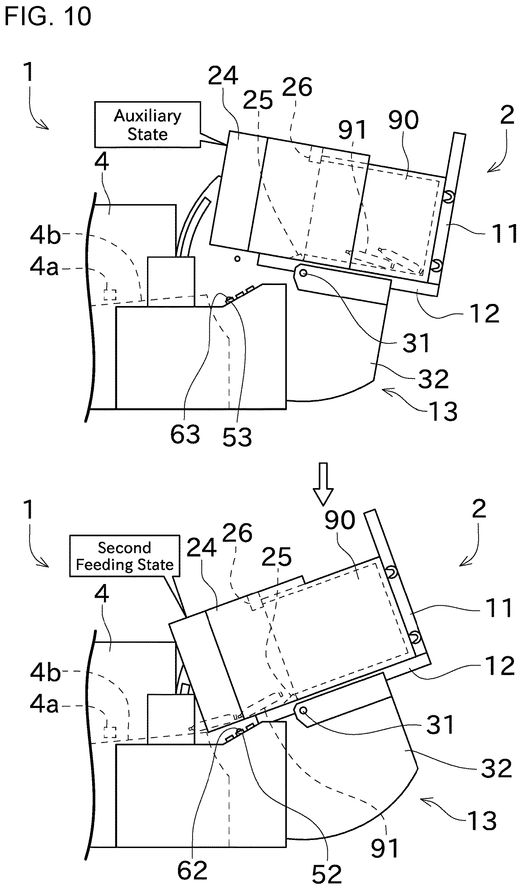

In determining that the number of repetitions exceeds a predetermined number, the control device 3 controls the motor 35. As a result, the state of the feeding device 2 is changed to an auxiliary state (S109, an upper part of FIG. 10), and then, the state of the feeding device 2 is changed to the second feeding state (S110, a lower part of FIG. 10). These processes are performed to feed the bobbin 91 not fed by simply switching between the first feeding state and the second feeding state alternately. Even if the first feeding state and the second feeding state are alternately switched, when the bobbin 91 is caught by a protrusion and the like of an inner wall of the housing body 90, for example, it may not be possible to remove the bobbin 91 from the housing body 90. In order to remove the bobbin 91 in such a state from the housing body 90, it is necessary to forcibly move the bobbin 91. Here, the auxiliary state is a state for moving the bobbin 91 toward the bottom of the housing body 90. Therefore, in the auxiliary state, the surface on which the bobbin 91 is transported (specifically, the contact surface 22, one surface of the housing body 90) is inclined upward as the surface approaches the transport device 4. In other words, the plane on which the bobbin is transported is inclined in a direction opposite to the direction of inclination in the feeding state. As described above, in the feeding state, the downstream end of the contact surface 22 (or the distal end of the extension part 12a) is located below a horizontal plane passing through the rotation center. In contrast, in the auxiliary state, the downstream end of the contact surface 22 is located above the horizontal plane passing through the rotation center.

As a configuration for simply and accurately changing the state of the feeding device 2 to the auxiliary state, the feeding device 2 includes a third proximity sensor 53 and a third protruding piece 63. The configurations of the third proximity sensor 53 and the third protruding piece 63 are the same as those of the second proximity sensor 52 and the second protruding piece 62, except that the targets to be aligned are different.

Here, if a gap exists between the second member 12 and the housing body 90, when the state of the feeding device 2 is changed to the auxiliary state, the bobbin 91 may possibly enter between the second member 12 and the housing body 90. To prevent such a possibility, in the present embodiment, the guide projection 25 is formed. The guide projection 25 is provided on the contact surface 22 and closes the gap between the second member 12 and the housing body 90. In the present embodiment, the guide projection 25 is formed with an incline, and thus, the bobbin 91 is less likely to be caught on the guide projection 25, and it is possible to accurately move the bobbin 91 toward the bottom of the housing body 90.

The guide projection 25 is particularly effective when the state of the feeding device 2 is changed to the auxiliary state. Further, for example, when the state of the feeding device 2 is changed from the preparation state to the feeding state, the bobbin 91 may possibly enter between the second member 12 and the housing body 90, and thus, the guide projection 25 is also useful. That is, the guide projection 25 may be formed even in the supply apparatus 1 in which the state of the feeding device 2 is not changed to the auxiliary state.

When the state of the feeding device 2 is changed to the auxiliary state, and then, to the second feeding state, the bobbin 91 gains momentum, making it less likely for the bobbin 91 to be caught in the housing body 90, and it is possible more reliably transport the bobbin 91 toward the transport device 4. Thus, the processes are completed. It should be noted that the descent of the feeding device 2 does not need to be performed automatically, and it is sufficient that the feeding device 2 is descended after receiving an instruction from the operator.

As described above, in the present embodiment, the state of the feeding device 2 is changed in a plurality of stages. In particular, the state of the feeding device 2 is repeatedly changed between the first feeding state and the second feeding state, and the state of the feeding device 2 is changed from the feeding state to the auxiliary state. When the state of the feeding device 2 is changed by using a hydraulic cylinder as in Patent Document 1, it is difficult to realize such a type of control. In such a regard, in the present embodiment, the state of the feeding device 2 is changed by using the motor 35, and thus, it is possible to easily realize such a type of control.

The flowchart illustrated in the above embodiment is an example, and some processes may be omitted, contents of such processes may be changed, or a new process may be added. For example, a plurality of stand-by states may be set, and after the state of the feeding device 2 is changed to the plurality of stand-by states in order, the state of the feeding device 2 may be changed to the second feeding state. After the stand-by state, the state of the feeding device 2 may be changed to the first feeding state. Instead of the process of alternately switching between the first feeding state and the second feeding state for a predetermined number of times, a process in which switching to the first feeding state and switching to the second feeding state are each performed only once (more particularly, a process of changing to the second feeding state after the first feeding state) may be performed. The process of changing the state of the feeding device 2 to the auxiliary state and then to the second feeding state may be omitted. Alternatively, a sensor configured to detect the bobbin 91 remaining in the housing body 90 may be provided, and only if the bobbin 91 remains in the housing body 90, a process of changing the state of the feeding device 2 to the auxiliary state and then to the second feeding state may be performed. Instead of the two stages of the first feeding state and the second feeding state, the feeding state may have one stage or three or more stages.

As described above, the supply apparatus 1 of the present embodiment includes the feeding device 2 and the transport device 4. The feeding device 2 feeds the bobbin 91 from the housing body 90 housing the bobbin 91 having yarn wound thereon. The transport device 4 transports the bobbin 91 fed by the feeding device 2. The state of the feeding device 2 is changeable between the preparation state and the feeding state, and in the feeding state, the bobbin 91 is fed from the housing body 90 into the transport device 4. The feeding device 2 includes the first member 11, the second member 12, the rotation device 13, and the control device 3. The first member 11 supports the housing body 90 at least when the state of the feeding device 2 is changed from the preparation state to the feeding state. The second member 12 is connected to the first member 11 and supports the housing body 90 in the feeding state. The rotation device 13 drives the first member 11 and the second member 12 to rotate to change the state of the feeding device 2 between the preparation state and the feeding state. The control device 3 controls the rotation device 13. The second member 12 is provided so as to extend in a first direction, and the first direction is a direction away from the first member 11 and intersects with the first member 11. The second member 12 includes the extension part 12a that extends in the first direction and that is located on the opposite side of the first member 11 across the rotation center of the feeding device 2, in a positional relationship of the first direction in the preparation state, and when the state of the feeding device 2 is changed from the preparation state to the feeding state, the extension part 12a approaches the transport device 4.

As a result, the rotation center is located at a midway part of the feeding device 2 rather than at an end. Therefore, it is possible to reduce a height of the rotation center, and thus, it is possible to reduce the height of the apparatus in the feeding state.

In the supply apparatus 1 of the present embodiment, a direction perpendicular to the first direction when viewed in a direction parallel to the rotation center is defined as the second direction. The feeding device 2 includes the pins 33 arranged to be arced in a range including the opposite side of the first member 11 across the rotation center, in a positional relationship of the second direction in the preparation state. When the rotation device 13 rotates the first sprocket 38 messing with the pins 33 to rotate the feeding device 2, the state of the feeding device 2 is changed.

As a result, it is possible to increase the freedom in position of the first sprocket 38 and a member for driving the first sprocket 38 (the motor 35, the reducer 36, and the like) to rotate, as compared to a configuration in which a gear and a drive device are arranged at the rotation center.

The supply apparatus 1 of the present embodiment includes the descent prevention device 40 provided at a location different from the rotation device 13. The control device 3 controls the descent prevention device 40. The descent prevention device 40 includes the second sprocket 41, the stop mechanism 43, and the detection unit 42. The second sprocket 41 meshes with the pins 33. The stop mechanism 43 can stop the rotation of the second sprocket 41 during a descent for changing the state of the feeding device 2 from the feeding state to the preparation state. The detection unit 42 detects abnormal rotation of the feeding device 2 during the descent. If the detection unit 42 detects the abnormal rotation of the feeding device 2 during the descent, the control device 3 operates the stop mechanism 43 to stop the rotation of the second sprocket 41.

As a result, it is possible to stop the rotation of the feeding device 2 if an abnormality occurs during the descent of the feeding device 2.

In the supply apparatus 1 of the present embodiment, the stop mechanism 43 includes the gear 43a, the gear stopper member 43b, and the actuator 43c. The gear 43a rotates integrally with the second sprocket 41. During an ascent where the state of the feeding device 2 is changed from the preparation state to the feeding state, the gear stopper member 43b slides against the gear 43a such that rotation of the gear 43a is permitted. During the descent, the gear stopper member 43b interferes with the gear 43a to prevent the rotation of the gear 43a. The actuator 43c moves the gear stopper member 43b closer to or away from the gear 43a. During a descent, if the detection unit 42 does not detect the abnormal rotation of the feeding device 2, the control device 3 controls the actuator 43c to move the gear stopper member 43b away from the gear 43a to permit the rotation of the gear 43a. During a descent, if the detection unit 42 detects the abnormal rotation of the feeding device 2, the control device 3 controls the actuator 43c to move the gear stopper member 43b close to the gear 43a to prevent the rotation of the gear 43a.

As a result, it is possible to surely stop the descent of the feeding device 2 due to the abnormal rotation while permitting the ascent of the feeding device 2.

In the supply apparatus 1 of the present embodiment, the feeding device 2 includes the detected hole 34a arranged to be arced in a range including the opposite side of the first member 11 across the rotation center, in a positional relationship of the second direction in the preparation state. The control device 3 determines whether the abnormal rotation of the feeding device 2 occurs, based on the number of times the detection unit 42 detects the detected hole 34a per unit time.

This makes it possible to detect the abnormal rotation of the feeding device 2 with a simple configuration.

In the supply apparatus 1 of the present embodiment, the rotation device 13 includes the motor 35 and the reducer 36. The motor 35 generates a driving force for driving the first member 11 and the second member 12 to rotate. The reducer 36 decelerates the driving force generated by the motor 35 and transmits the decelerated driving force. The reducer 36 includes the input unit 39a to which the driving force is input by the motor 35 and the output unit 39b decelerates the driving force and output a decelerated driving force. The first member 11 and the second member 12 are driven to rotate by the driving force output from the output unit 39b of the reducer 36. The reducer 36 includes a self-locking function of preventing driving of the input unit 39a by a force transmitted to the output unit 39b to prevent driving of the output unit 39b.

When the self-locking function is effected, it is possible to suppress the feeding device 2 from rotating due to its own weight.

In the supply apparatus 1 of the present embodiment, the reducer 36 includes the worm gear 37, and the self-locking function is realized by the worm gear 37.

This makes it possible to suppress the rotation of the feeding device 2 due to its own weight by using only a mechanical configuration.

In the supply apparatus 1 of the present embodiment, the supplying apparatus 1 includes the stopper member 4c that stops the bobbin 91 flowing toward the transport device 4. The feeding state includes the first feeding state and the second feeding state. In the first feeding state, the distal end of the extension part 12a is located lower than in the second feeding state. In the first feeding state, the stopper member 4c is located on the extension line of the downstream end of the contact surface 22 on which the bobbin 91 fed into the transport device 4 flows. In the second feeding state, the extension line of the downstream end of the contact surface 22 intersects with an upper end of the stopper member 4c or is located above the stopper member 4c. Under the control of the control device 3, the state of the feeding device 2 is changed in the order of the first feeding state and the second feeding state.

In the first feeding state, the bobbins 91 flow on the contact surface 22 and are blocked by the stopper member 4c. Thereafter, the state of the feeding device 2 is changed to the second feeding state, and thus, it is possible to feed the blocked bobbins 91 into the transport device 4.

In the supplying apparatus 1 of the present embodiment, the state of the feeding device 2 includes the auxiliary state for moving the bobbin 91 towards a bottom of the housing body 90. Under the control of the control device 3, the state of the feeding device 2 is changed in the order of the feeding state, the auxiliary state, and the feeding state.

When the state of the feeding device 2 is changed from the feeding state to the auxiliary state, it is possible to move the bobbin 91 toward a reverse direction of the transport device 4. Therefore, the subsequent change of the state of the feeding device 2 to the feeding state imparts momentum to the bobbin 91, and the momentum allows the bobbin 91 to overcome any step or the like, for example, that may exist in the housing body 90.

In the supply apparatus 1 of the present embodiment, the first member 11 includes the solid base member 11b and the support member 11c. The support member 11c is attached to the base member 11b, is hollow, and contacts the bottom of the housing body 90 to support the housing body 90.

This reduces the size and weight of each component compared to a case where the first member 11 is formed by a single member. The support member 11c is hollow, and thus, the weight of the support member is reduced. As a result, it is possible to facilitate handling and assembly of the components.

In the supply apparatus 1 of the present embodiment, the second member 12 includes the contact surface 22 that contacts a side surface of the housing body 90 and on which the bobbin 91 fed into the transport device 4 flows. The contact surface 22 is formed thereon with the guide projection 25 that guides, toward an inside of the housing body 90, the bobbin 91 moving along the contact surface 22 toward a bottom side of the housing body 90.

This suppresses the bobbin 91 from entering between the contact surface 22 and the housing body 90.

In the supply apparatus 1 of the present embodiment, the rotation device 13 is formed with the outer peripheral surface 30 that restricts movement of the bobbin 91, by preventing the bobbin 91 at an upstream end of the transport device 4 from moving further upstream, when the state of the feeding device 2 is changed from the preparation state to the feeding state. The outer peripheral surface 30 includes an arced surface when the outer peripheral surface 30 is viewed in a direction of the rotation shaft 31 of the rotation device 13.

As a result, the outer peripheral surface 30 includes an arced surface, and thus, the yarn or the bobbin 91 is less likely to be caught between the outer peripheral surface 30 and another member. The bobbin 91 is less likely to be pinched between the outer peripheral surface 30 and another member.

## Claims

1. A supply apparatus (1), comprising:
a transport device (4) configured to transport a bobbin having yarn wound thereon; and
a feeding device (2) configured to feed the bobbin from a housing body (90) housing the bobbin, to the transport device (4), wherein
a state of the feeding device (2) is changeable between a preparation state and a feeding state, and in the feeding state, the bobbin is fed from the housing body (90) into the transport device (4),
the feeding device (2) includes,
a first member (11) configured to support the housing body (90) at least when the state of the feeding device (2) is changed from the preparation state to the feeding state,
a second member (12) connected to the first member (11) and configured to support the housing body (90) in the feeding state,
a rotation device (13) configured to drive the first member (11) and the second member (12) to rotate to change the state of the feeding device (2) between the preparation state and the feeding state, and
a control device (3) configured to control the rotation device (13),
the second member (12) is provided so as to extend in a first direction, and the first direction is a direction away from the first member (11) and intersects with the first member (11), and
the second member (12) includes an extension part (12a) that extends in the first direction and that is located on an opposite side of the first member (11) across a rotation center of the feeding device (2), in a positional relationship of the first direction in the preparation state, and when the state of the feeding device (2) is changed from the preparation state to the feeding state, the extension part (12a) approaches the transport device (4),
**characterized in that** the state of the feeding device (2) includes an auxiliary state for moving the bobbin towards a bottom of the housing body (90), and
under a control of the control device (3), the state of the feeding device (2) is changed in the order of the feeding state, the auxiliary state, and the feeding state.

2. The supply apparatus (1) according to claim 1, wherein
a direction perpendicular to the first direction when viewed in a direction parallel to the rotation center is defined as a second direction,
the feeding device (2) includes pins arranged to be arced in a range including the opposite side of the first member (11) across the first direction passing through the rotation center, in a positional relationship of the second direction in the preparation state, and
when the rotation device (13) rotates a first transmission member (38) messing with the pins to rotate the feeding device (2), the state of the feeding device (2) is changed.

3. The supply apparatus (1) according to claim 2, comprising:
a descent prevention device (40) provided at a location different from the rotation device (13), wherein
the control device (3) controls the descent prevention device (40),
the descent prevention device (40) includes,
a second transmission member (41) that meshes with the pins,
a stop mechanism (43) configured to stop the rotation of the second transmission member (41) during a descent for changing the state of the feeding device (2) from the feeding state to the preparation state, and
a detection unit (42) configured to detect abnormal rotation of the feeding device (2) during the descent, and
if the detection unit (42) detects the abnormal rotation of the feeding device (2) during the descent, the control device (3) operates the stop mechanism (43) to stop the rotation of the second transmission member (41).

4. The supply apparatus (1) according to claim 3, wherein
the stop mechanism (43) includes,
a gear (43a) configured to rotate integrally with the second transmission member (41),
a gear stopper member (43b) configured to, during an ascent where the state of the feeding device (2) is changed from the preparation state to the feeding state, slide against the gear (43a) such that rotation of the gear (43a) is permitted, and configured to, during the descent, interfere with the gear (43a) to prevent the rotation of the gear (43a), and
an actuator (43c) configured to move the gear stopper member (43b) toward or away from the gear (43a),
during the descent, if the detection unit (42) does not detect the abnormal rotation of the feeding device (2), the control device (3) controls the actuator (43c) to move the gear stopper member (43b) away from the gear (43a) to permit the rotation of the gear, and
during the descent, if the detection unit (42) detects the abnormal rotation of the feeding device (2), the control device (3) controls the actuator (43c) to move the gear stopper member (43b) close to the gear (43a) to prevent the rotation of the gear (43a).

5. The supply apparatus (1) according to any one of claims 2 to 4, wherein
the feeding device (2) includes a detected part (34a) arranged to be arced in a range including the opposite side of the first member (11) across the first direction passing through the rotation center, in a positional relationship of the second direction in the preparation state, and
the control device (3) determines whether the abnormal rotation of the feeding device (2) occurs, based on the number of times the detection unit (42) detects the detected part (34a) per unit time.

6. The supply apparatus (1) according to any one of claims 1 to 5, wherein
the rotation device (13) includes,
a drive device (35) configured to generate a driving force for driving the first member (11) and the second member (12) to rotate, and
a reducer (36) including an input unit (39a) to which the driving force is input by the drive device (35) and an output unit (39b) configured to decelerate the driving force and output a decelerated driving force,
the first member (11) and the second member (12) are driven to rotate by the driving force output from the output unit (39b) of the reducer (36), and
the reducer (36) includes a self-locking function of preventing driving of the input unit (39a) by a force transmitted to the output unit (39b) to prevent driving of the output unit (39b).

7. The supply apparatus (1) according to claim 6, wherein
the reducer (36) includes a worm gear (37), and the self-locking function is realized by the worm gear (37).

8. The supply apparatus (1) according to any one of claims 1 to 7, comprising:
a stopper member (4c) configured to stop the bobbin flowing toward the transport device (4), wherein
the feeding state includes a first feeding state and a second feeding state,
in the first feeding state, a distal end of the extension part (12a) is located lower than in the second feeding state,
in the first feeding state, the stopper member (4c) is located on an extension line of a downstream end of a contact surface on which the bobbin fed into the transport device (4) flows,
in the second feeding state, the extension line of the downstream end of the contact surface intersects with an upper end of the stopper member (4c) or is located above the stopper member (4c), and
under a control of the control device (3), the state of the feeding device (2) is changed in the order of the first feeding state and the second feeding state.

9. The supply apparatus (1) according to any one of claims 1 to 8, wherein
the first member (11) includes,
a solid base member (11b), and
a support member attached to the base member (11b), the support member being hollow and configured to contact the bottom of the housing body (90) to support the housing body (90).

10. The supply apparatus (1) according to any one of claims 1 to 9, wherein
the second member (12) includes a contact surface (22) that contacts a side surface of the housing body (90) and on which the bobbin fed into the transport device (4) flows, and
the contact surface (22) is formed thereon with a guide projection (25) that guides, toward an inside of the housing body (90), the bobbin moving along the contact surface (22) toward a bottom side of the housing body (90).

11. The supply apparatus (1) according to any one of claims 1 to 10, wherein
the rotation device (13) is formed with an outer peripheral surface (30) that restricts movement of the bobbin, by preventing the bobbin at an upstream end of the transport device (4) from moving further upstream, when the state of the feeding device (2) is changed from the preparation state to the feeding state, and
the outer peripheral surface (30) includes an arced surface when the outer peripheral surface (30) is viewed in a direction of a rotation shaft of the rotation device (13).

## Patentansprüche

1. Zuführvorrichtung (1), umfassend:
eine Transporteinrichtung (4), die dazu ausgebildet ist, eine Spule zu transportieren, auf der Garn aufgewickelt ist; und
eine Zuführeinrichtung (2), die dazu ausgebildet ist, die Spule von einem Gehäusekörper (90), der die Spule aufnimmt, zu der Transporteinrichtung (4) zuzuführen, wobei
ein Zustand der Zuführeinrichtung (2) zwischen einem Vorbereitungszustand und einem Zuführzustand veränderbar ist, und in dem Zuführzustand die Spule von dem Gehäusekörper (90) in die Transporteinrichtung (4) zugeführt wird,
die Zuführeinrichtung (2) einschließt
ein erstes Element (11), das dazu ausgebildet ist, den Gehäusekörper (90) zumindest dann zu stützen, wenn der Zustand der Zuführeinrichtung (2) von dem Vorbereitungszustand zu dem Zuführzustand geändert wird,
ein zweites Element (12), das mit dem ersten Element (11) verbunden und dazu ausgebildet ist, den Gehäusekörper (90) in dem Zuführzustand zu stützen,
eine Dreheinrichtung (13), die dazu ausgebildet ist, das erste Element (11) und das zweite Element (12) zum Drehen anzutreiben, um den Zustand der Zuführeinrichtung (2) zwischen dem Vorbereitungszustand und dem Zuführzustand zu ändern, und
eine Steuereinrichtung (3), die dazu ausgebildet ist, die Dreheinrichtung (13) zu steuern, das zweite Element (12) so bereitgestellt ist, dass es sich in eine erste Richtung erstreckt, und die erste Richtung eine Richtung weg von dem ersten Element (11) ist und das erste Element (11) schneidet, und
das zweite Element (12) einen Verlängerungsabschnitt (12a) einschließt, der sich in die erste Richtung erstreckt und der in einer Positionsbeziehung der ersten Richtung in dem Vorbereitungszustand auf einer gegenüberliegenden Seite des ersten Elements (11) über ein Drehzentrum der Zuführeinrichtung (2) hinweg angeordnet ist, und wenn der Zustand der Zuführeinrichtung (2) von dem Vorbereitungszustand zu dem Zuführzustand geändert wird, nähert sich der Verlängerungsabschnitt (12a) der Transporteinrichtung (4), **dadurch gekennzeichnet, dass** der Zustand der Zuführeinrichtung (2) einen Hilfszustand zum Bewegen der Spule zu einem Boden des Gehäusekörpers (90) hin einschließt, und
unter einer Steuerung der Steuereinrichtung (3) der Zustand der Zuführeinrichtung (2) in der Reihenfolge des Zuführzustands, des Hilfszustands und des Zuführzustands geändert wird.

2. Zuführvorrichtung (1) nach Anspruch 1, wobei
eine Richtung, die senkrecht zu der ersten Richtung ist, wenn sie in einer Richtung parallel zu dem Drehzentrum betrachtet wird, als eine zweite Richtung definiert ist,
die Zuführeinrichtung (2) Stifte einschließt, die so angeordnet sind, dass sie in einem Bereich bogenförmig angeordnet sind, der die gegenüberliegende Seite des ersten Elements (11) über die erste Richtung hinweg, die durch das Drehzentrum geht, in einer Positionsbeziehung der zweiten Richtung in dem Vorbereitungszustand einschließt, und
wenn die Dreheinrichtung (13) ein erstes Übertragungselement (38) dreht, das mit den Stiften kämmt, um die Zuführeinrichtung (2) zu drehen, wird der Zustand der Zuführeinrichtung (2) geändert.

3. Zuführvorrichtung (1) nach Anspruch 2, umfassend:
eine Absenkverhinderungseinrichtung (40), die an einer von der Dreheinrichtung (13) verschiedenen Stelle bereitgestellt ist, wobei
die Steuereinrichtung (3) die Absenkverhinderungseinrichtung (40) steuert,
die Absenkverhinderungseinrichtung (40) einschließt
ein zweites Übertragungselement (41), das mit den Stiften kämmt,
einen Stoppmechanismus (43), der dazu ausgebildet ist, die Drehung des zweiten Übertragungselements (41) während einer Abwärtsbewegung zum Ändern des Zustands der Zuführeinrichtung (2) von dem Zuführzustand zu dem Vorbereitungszustand zu stoppen, und
eine Detektionseinheit (42), die dazu ausgebildet ist, eine anormale Drehung der Zuführeinrichtung (2) während der Abwärtsbewegung zu detektieren, und
wenn die Detektionseinheit (42) die anormale Drehung der Zuführeinrichtung (2) während der Abwärtsbewegung detektiert, betätigt die Steuereinrichtung (3) den Stoppmechanismus (43), um die Drehung des zweiten Übertragungselements (41) zu stoppen.

4. Zuführvorrichtung (1) nach Anspruch 3, wobei
der Stoppmechanismus (43) einschließt
ein Zahnrad (43a), das dazu ausgebildet ist, sich integral mit dem zweiten Übertragungselement (41) zu drehen,
ein Zahnrad-Sperrelement (43b), das dazu ausgebildet ist, während einer Aufwärtsbewegung, bei der der Zustand der Zuführeinrichtung (2) von dem Vorbereitungszustand zu dem Zuführzustand geändert wird, gegen das Zahnrad (43a) zu gleiten, sodass eine Drehung des Zahnrads (43a) erlaubt ist, und dazu ausgebildet ist, während der Abwärtsbewegung mit dem Zahnrad (43a) in Eingriff zu gelangen, um die Drehung des Zahnrads (43a) zu verhindern, und
einen Aktuator (43c), der dazu ausgebildet ist, das Zahnrad-Sperrelement (43b) zu dem Zahnrad (43a) hin oder von diesem weg zu bewegen,
während der Abwärtsbewegung, wenn die Detektionseinheit (42) die anormale Drehung der Zuführeinrichtung (2) nicht detektiert, steuert die Steuereinrichtung (3) den Aktuator (43c), um das Zahnrad-Sperrelement (43b) von dem Zahnrad (43a) wegzubewegen, um die Drehung des Zahnrads zu erlauben, und
während der Abwärtsbewegung, wenn die Detektionseinheit (42) die anormale Drehung der Zuführeinrichtung (2) detektiert, steuert die Steuereinrichtung (3) den Aktuator (43c), um das Zahnrad-Sperrelement (43b) nahe zu dem Zahnrad (43a) zu bewegen, um die Drehung des Zahnrads (43a) zu verhindern.

5. Zuführvorrichtung (1) nach einem der Ansprüche 2 bis 4, wobei
die Zuführeinrichtung (2) einen Detektionsabschnitt (34a) einschließt, der so angeordnet ist, dass er in einem Bereich bogenförmig angeordnet ist, der die gegenüberliegende Seite des ersten Elements (11) über die erste Richtung hinweg, die durch das Drehzentrum geht, in einer Positionsbeziehung der zweiten Richtung in dem Vorbereitungszustand einschließt, und
die Steuereinrichtung (3), basierend auf der Anzahl von Malen pro Zeiteinheit, die die Detektionseinheit (42) den Detektionsabschnitt (34a) detektiert, bestimmt, ob die anormale Drehung der Zuführeinrichtung (2) auftritt.

6. Zuführvorrichtung (1) nach einem der Ansprüche 1 bis 5, wobei
die Dreheinrichtung (13) einschließt
eine Antriebseinrichtung (35), die dazu ausgebildet ist, eine Antriebskraft zum Antreiben des ersten Elements (11) und des zweiten Elements (12) zum Drehen zu erzeugen, und
ein Untersetzungsgetriebe (36), das eine Eingangseinheit (39a), der die Antriebskraft von der Antriebseinrichtung (35) zugeführt wird, und eine Ausgangseinheit (39b) einschließt, die dazu ausgebildet ist, die Antriebskraft zu verlangsamen und eine verlangsamte Antriebskraft auszugeben,
das erste Element (11) und das zweite Element (12) durch die von der Ausgangseinheit (39b) des Untersetzungsgetriebes (36) ausgegebene Antriebskraft zum Drehen angetrieben werden, und
das Untersetzungsgetriebe (36) eine Selbsthemmungsfunktion einschließt, die verhindert, dass die Eingangseinheit (39a) durch eine auf die Ausgangseinheit (39b) übertragene Kraft angetrieben wird, um ein Antreiben der Ausgangseinheit (39b) zu verhindern.

7. Zuführvorrichtung (1) nach Anspruch 6, wobei
das Untersetzungsgetriebe (36) ein Schneckengetriebe (37) einschließt, und die Selbsthemmungsfunktion durch das Schneckengetriebe (37) realisiert wird.

8. Zuführvorrichtung (1) nach einem der Ansprüche 1 bis 7, umfassend:
ein Anschlagelement (4c), das dazu ausgebildet ist, die zu der Transporteinrichtung (4) strömende Spule zu stoppen, wobei
der Zuführzustand einen ersten Zuführzustand und einen zweiten Zuführzustand einschließt,
in dem ersten Zuführzustand ein distales Ende des Verlängerungsabschnitts (12a) tiefer angeordnet ist als in dem zweiten Zuführzustand,
in dem ersten Zuführzustand das Anschlagelement (4c) auf einer Verlängerungslinie eines stromabwärtigen Endes einer Kontaktfläche angeordnet ist, auf der die in die Transporteinrichtung (4) zugeführte Spule strömt,
in dem zweiten Zuführzustand die Verlängerungslinie des stromabwärtigen Endes der Kontaktfläche ein oberes Ende des Anschlagelements (4c) schneidet oder oberhalb des Anschlagelements (4c) angeordnet ist, und
unter einer Steuerung der Steuereinrichtung (3) der Zustand der Zuführeinrichtung (2) in der Reihenfolge des ersten Zuführzustands und des zweiten Zuführzustands geändert wird.

9. Zuführvorrichtung (1) nach einem der Ansprüche 1 bis 8, wobei
das erste Element (11) einschließt
ein massives Basiselement (11b), und
ein Stützelement, das an dem Basiselement (11b) befestigt ist, wobei das Stützelement hohl ist und dazu ausgebildet ist, den Boden des Gehäusekörpers (90) zu kontaktieren, um den Gehäusekörper (90) zu stützen.

10. Zuführvorrichtung (1) nach einem der Ansprüche 1 bis 9, wobei
das zweite Element (12) eine Kontaktfläche (22) einschließt, die eine Seitenfläche des Gehäusekörpers (90) kontaktiert und auf der die in die Transporteinrichtung (4) zugeführte Spule strömt, und
die Kontaktfläche (22) darauf mit einem Führungsvorsprung (25) versehen ist, der die sich entlang der Kontaktfläche (22) zu einer Bodenseite des Gehäusekörpers (90) bewegende Spule zu einem Inneren des Gehäusekörpers (90) hin führt.

11. Zuführvorrichtung (1) nach einem der Ansprüche 1 bis 10, wobei
die Dreheinrichtung (13) mit einer Außenumfangsfläche (30) versehen ist, die eine Bewegung der Spule einschränkt, indem verhindert wird, dass sich die Spule an einem stromaufwärtigen Ende der Transporteinrichtung (4) weiter stromaufwärts bewegt, wenn der Zustand der Zuführeinrichtung (2) von dem Vorbereitungszustand zu dem Zuführzustand geändert wird, und
die Außenumfangsfläche (30) eine bogenförmige Fläche einschließt, wenn die Außenumfangsfläche (30) in einer Richtung einer Drehachse der Dreheinrichtung (13) betrachtet wird.

## Revendications

1. Appareil d'alimentation (1), comprenant :
un dispositif de transport (4) configuré pour transporter une canette présentant un fil enroulé sur celle-ci ; et
un dispositif d'amenée (2) configuré pour introduire la canette depuis un corps de logement (90) logeant la canette, vers le dispositif de transport (4), dans lequel
un état du dispositif d'amenée (2) peut être changé entre un état de préparation et un état d'amenée, et dans l'état d'amenée, la canette est introduite depuis le corps de logement (90) dans le dispositif de transport (4),
le dispositif d'amenée (2) inclut,
un premier élément (11) configuré pour supporter le corps de logement (90) au moins lorsque l'état du dispositif d'amenée (2) est changé de l'état de préparation à l'état d'amenée,
un deuxième élément (12) relié au premier élément (11) et configuré pour supporter le corps de logement (90) dans l'état d'amenée,
un dispositif de rotation (13) configuré pour entraîner le premier élément (11) et le deuxième élément (12) en rotation pour changer l'état du dispositif d'amenée (2) entre l'état de préparation et l'état d'amenée, et
un dispositif de commande (3) configuré pour commander le dispositif de rotation (13),
le deuxième élément (12) est prévu de manière à s'étendre dans une première direction, et la première direction est une direction s'éloignant du premier élément (11) et intersectant le premier élément (11), et
le deuxième élément (12) inclut une partie d'extension (12a) qui s'étend dans la première direction et qui est située sur un côté opposé au premier élément (11) par rapport à un centre de rotation du dispositif d'amenée (2), dans une relation de position de la première direction dans l'état de préparation, et lorsque l'état du dispositif d'amenée (2) est changé de l'état de préparation à l'état d'amenée, la partie d'extension (12a) s'approche du dispositif de transport (4),
**caractérisé en ce que** l'état du dispositif d'amenée (2) inclut un état auxiliaire pour déplacer la canette vers un fond du corps de logement (90), et
sous une commande du dispositif de commande (3), l'état du dispositif d'amenée (2) est changé dans l'ordre de l'état d'amenée, de l'état auxiliaire et de l'état d'amenée.

2. Appareil d'alimentation (1) selon la revendication 1, dans lequel
une direction perpendiculaire à la première direction lorsqu'elle est vue dans une direction parallèle au centre de rotation est définie comme une deuxième direction,
le dispositif d'amenée (2) inclut des broches agencées de manière à être arquées dans une plage incluant le côté opposé du premier élément (11) de part et d'autre de la première direction en passant par le centre de rotation, dans une relation de position de la deuxième direction dans l'état de préparation, et
lorsque le dispositif de rotation (13) fait tourner un premier élément de transmission (38) s'engrenant avec les broches pour faire tourner le dispositif d'amenée (2), l'état du dispositif d'amenée (2) est changé.

3. Appareil d'alimentation (1) selon la revendication 2, comprenant :
un dispositif (40) de prévention de descente prévu au niveau d'un emplacement différent du dispositif de rotation (13), dans lequel
le dispositif de commande (3) commande le dispositif (40) de prévention de descente,
le dispositif (40) de prévention de descente inclut,
un deuxième élément de transmission (41) qui s'engrène avec les broches,
un mécanisme d'arrêt (43) configuré pour arrêter la rotation du deuxième élément de transmission (41) pendant une descente destinée à changer l'état du dispositif d'amenée (2) de l'état d'amenée à l'état de préparation, et
une unité de détection (42) configurée pour détecter une rotation anormale du dispositif d'amenée (2) pendant la descente, et
si l'unité de détection (42) détecte la rotation anormale du dispositif d'amenée (2) pendant la descente, le dispositif de commande (3) actionne le mécanisme d'arrêt (43) pour arrêter la rotation du deuxième élément de transmission (41).

4. Appareil d'alimentation (1) selon la revendication 3, dans lequel
le mécanisme d'arrêt (43) inclut,
un engrenage (43a) configuré pour tourner de manière intégrale avec le deuxième élément de transmission (41),
un élément (43b) de butée d'engrenage configuré pour, pendant une montée où l'état du dispositif d'amenée (2) est changé de l'état de préparation à l'état d'amenée, glisser contre l'engrenage (43a) de sorte qu'une rotation de l'engrenage (43a) soit permise, et configuré pour, pendant la descente, interférer avec l'engrenage (43a) pour empêcher la rotation de l'engrenage (43a), et
un actionneur (43c) configuré pour déplacer l'élément (43b) de butée d'engrenage vers ou à l'écart de l'engrenage (43a),
pendant la descente, si l'unité de détection (42) ne détecte pas la rotation anormale du dispositif d'amenée (2), le dispositif de commande (3) commande l'actionneur (43c) pour déplacer l'élément (43b) de butée d'engrenage en l'éloignant de l'engrenage (43a) afin de permettre la rotation de l'engrenage, et
pendant la descente, si l'unité de détection (42) détecte la rotation anormale du dispositif d'amenée (2), le dispositif de commande (3) commande l'actionneur (43c) pour déplacer l'élément (43b) de butée d'engrenage près de l'engrenage (43a) afin d'empêcher la rotation de l'engrenage (43a).

5. Appareil d'alimentation (1) selon l'une quelconque des revendications 2 à 4, dans lequel
le dispositif d'amenée (2) inclut une partie détectée (34a) agencée de manière à être arquée dans une plage incluant le côté opposé du premier élément (11) de part et d'autre de la première direction en passant par le centre de rotation, dans une relation de position de la deuxième direction dans l'état de préparation, et
le dispositif de commande (3) détermine si la rotation anormale du dispositif d'amenée (2) se produit, sur la base du nombre de fois où l'unité de détection (42) détecte la partie détectée (34a) par unité de temps.

6. Appareil d'alimentation (1) selon l'une quelconque des revendications 1 à 5, dans lequel
le dispositif de rotation (13) inclut,
un dispositif d'entraînement (35) configuré pour générer une force d'entraînement pour entraîner le premier élément (11) et le deuxième élément (12) en rotation, et
un réducteur (36) incluant une unité d'entrée (39a) dans laquelle la force d'entraînement est entrée par le dispositif d'entraînement (35) et une unité de sortie (39b) configurée pour décélérer la force d'entraînement et produire en sortie une force d'entraînement décélérée,
le premier élément (11) et le deuxième élément (12) sont entraînés en rotation par la force d'entraînement produite en sortie depuis l'unité de sortie (39b) du réducteur (36), et
le réducteur (36) inclut une fonction d'autoverrouillage consistant à empêcher l'entraînement de l'unité d'entrée (39a) par une force transmise à l'unité de sortie (39b) afin d'empêcher l'entraînement de l'unité de sortie (39b).

7. Appareil d'alimentation (1) selon la revendication 6, dans lequel
le réducteur (36) inclut un engrenage à vis sans fin (37), et la fonction d'autoverrouillage est réalisée par l'engrenage à vis sans fin (37).

8. Appareil d'alimentation (1) selon l'une quelconque des revendications 1 à 7, comprenant :
un élément de butée (4c) configuré pour arrêter la canette se déplaçant vers le dispositif de transport (4), dans lequel
l'état d'amenée inclut un premier état d'amenée et un deuxième état d'amenée,
dans le premier état d'amenée, une extrémité distale de la partie d'extension (12a) est située plus bas que dans le deuxième état d'amenée,
dans le premier état d'amenée, l'élément de butée (4c) est situé sur une ligne d'extension d'une extrémité aval d'une surface de contact sur laquelle la canette introduite dans le dispositif de transport (4) se déplace,
dans le deuxième état d'amenée, la ligne d'extension de l'extrémité aval de la surface de contact coupe une extrémité supérieure de l'élément de butée (4c) ou est située au-dessus de l'élément de butée (4c), et
sous une commande du dispositif de commande (3), l'état du dispositif d'amenée (2) est changé dans l'ordre du premier état d'amenée et du deuxième état d'amenée.

9. Appareil d'alimentation (1) selon l'une quelconque des revendications 1 à 8, dans lequel
le premier élément (11) inclut,
un élément de base solide (11b), et
un élément de support fixé à l'élément de base (11b), l'élément de support étant creux et configuré pour entrer en contact avec le fond du corps de logement (90) afin de supporter le corps de logement (90).

10. Appareil d'alimentation (1) selon l'une quelconque des revendications 1 à 9, dans lequel
le deuxième élément (12) inclut une surface de contact (22) qui entre en contact avec une surface latérale du corps de logement (90) et sur laquelle la canette introduite dans le dispositif de transport (4) se déplace, et
la surface de contact (22) est formée sur celle-ci avec une saillie de guidage (25) qui guide, vers un intérieur du corps de logement (90), la canette se déplaçant le long de la surface de contact (22) vers un côté de fond du corps de logement (90).

11. Appareil d'alimentation (1) selon l'une quelconque des revendications 1 à 10, dans lequel
le dispositif de rotation (13) est formé avec une surface périphérique externe (30) qui limite le mouvement de la canette, en empêchant la canette au niveau d'une extrémité amont du dispositif de transport (4) de se déplacer plus en amont, lorsque l'état du dispositif d'amenée (2) est changé de l'état de préparation à l'état d'amenée, et
la surface périphérique externe (30) inclut une surface arquée lorsque la surface périphérique externe (30) est vue dans une direction d'un arbre de rotation du dispositif de rotation (13).
